(19) Europäisches Patentamt / European Patent Office / Office européen des brevets

(11) **EP 4 691 259 A1**

(12) **EUROPEAN PATENT APPLICATION**
published in accordance with Art. 153(4) EPC

(43) Date of publication:
**11.02.2026 Bulletin 2026/07**

(21) Application number: **24779988.5**

(22) Date of filing: **22.03.2024**

(51) International Patent Classification (IPC):
*A23L 5/00* (2016.01)    *A23J 3/14* (2006.01)
*A23L 27/00* (2016.01)    *A23L 27/21* (2016.01)

(52) Cooperative Patent Classification (CPC):
**A23J 3/14; A23L 5/00; A23L 27/00; A23L 27/21**

(86) International application number:
**PCT/JP2024/011335**

(87) International publication number:
**WO 2024/203870 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **31.03.2023 JP 2023057966
09.06.2023 JP 2023095874**

(71) Applicant: **Amano Enzyme Inc.
Nagoya-shi
Aichi 460-8630 (JP)**

(72) Inventors:
• **SAKAI, Kiyota**
  **Kakamigahara-shi, Gifu 509-0109 (JP)**
• **OKUDA, Keita**
  **Kakamigahara-shi, Gifu 509-0109 (JP)**
• **HIURA, Keita**
  **Kakamigahara-shi, Gifu 509-0109 (JP)**
• **HAYAKAWA, Mari**
  **Kakamigahara-shi, Gifu 509-0109 (JP)**

(74) Representative: **Müller-Boré & Partner
Patentanwälte PartG mbB
Friedenheimer Brücke 21
80639 München (DE)**

(54) **METHOD FOR PRODUCING PROCESSED PROTEIN-CONTAINING COMPOSITION**

(57)    The purpose of the present invention is to provide processing techniques for enhancing the saltiness of a protein-containing composition. Increased saltiness at the time of eating is exhibited by a processed protein-containing composition obtained via a method for producing a processed protein-containing composition including a step for causing a glutaminase, a filamentous fungus-derived protease, and a bacterium-derived protease to act on a protein-containing composition including sodium chloride and/or potassium chloride, wherein the total quantity of the sodium chloride and the potassium chloride content is a quantity which becomes 0.35-1.90 wt% at the time of eating, and a method for producing a processed protein-containing composition including a step for causing a glutaminase, a filamentous fungus-derived protease, and a bacterium-derived protease to act on a protein-containing composition including sodium chloride and potassium chloride, wherein the sodium chloride content is a quantity that becomes 0.20 wt% or greater and less than 0.35 wt% at the time of eating, and the potassium chloride content is a quantity that becomes 0.30 wt% or greater at the time of eating.

EP 4 691 259 A1

## Description

Technical Field

The present invention relates to a method for producing a processed protein-containing composition. More specifically, the present invention relates to a processing technique for enhancing the saltiness of a protein-containing composition.

Background Art

In recent years, in food markets, it has been desired to replace animal-derived foods with plant-derived foods in response to an increase in consciousness such as health consciousness, diet, environmental problems, or animal welfare as well as the preference of some consumers such as vegetarian or vegan. In response to an increase in health consciousness or diet consciousness, the need for reducing salinity is also expanding.

Meanwhile, various attempts have been made to improve sensory characteristics such as taste, flavor, and aroma even in health foods. For example, PTL 1 describes that a glutaminase derived from a bacterium belonging to the genus Bacillus, a filamentous fungus-derived protease, a protease derived from the genus Bacillus or Geobacillus are caused to act on a protein raw material to improve rich taste, umami, and roasted savor.

Citation List

Patent Literature

PTL 1: WO 2022/191303 A

Summary of Invention

Technical Problem

The glutamyl peptide hydrolase and the protease produce glutamic acid as an umami component from a protein component, and thus can cause a taste change such as improvement in umami. On the other hand, processing for enhancing saltiness in protein-containing foods has not been studied.

Therefore, an object of the present invention is to provide a processing technique for enhancing the saltiness of a protein-containing composition.

Solution to Problem

As a result of intensive studies, the present inventors have found that the saltiness of a protein-containing composition can be enhanced by causing a combination of a glutaminase, a filamentous fungus-derived protease, and a bacterium-derived protease to act on a protein-containing composition containing a predetermined amount of sodium chloride and/or potassium chloride. Such an effect of enhancing saltiness was unexpected in that it was especially remarkable unlike the effects of improving richness and umami. The present inventors have conducted further studies based on the findings, leading to the completion of the present invention.

That is, the present invention provides inventions of the following aspects.

Item 1. A method for producing a processed protein-containing composition, the production method including a step of causing a glutaminase, a filamentous fungus-derived protease, and a bacterium-derived protease to act on a protein-containing composition containing sodium chloride and/or potassium chloride, in which a total content of the sodium chloride and the potassium chloride is 0.35 to 1.90 wt% at the time of eating.

Item 2. A method for producing a processed protein-containing composition, the production method including a step of causing a glutaminase, a filamentous fungus-derived protease, and a bacterium-derived protease to act on a protein-containing composition containing sodium chloride and potassium chloride, in which a content of the sodium chloride is 0.20 wt% or more and less than 0.35 wt% at the time of eating, and a content of the potassium chloride is 0.30 wt% or more at the time of eating.

Item 3. The production method described in item 1 or 2, in which the glutaminase is a glutaminase (EC3.5.1.2).

Item 4. The production method described in item 3, in which the glutaminase is a glutaminase derived from a bacterium belonging to the genus Bacillus or Geobacillus.

Item 5. The production method described in any one of items 1 to 4, in which the filamentous fungus-derived protease is a protease derived from the genus Aspergillus.

Item 6. The production method described in any one of items 1 to 5, in which the bacterium-derived protease is a protease derived from a bacterium belonging to the genus Bacillus or Geobacillus.

Item 7. The production method described in any one of items 1 to 6, in which the filamentous fungus-derived protease is used at a ratio of 1000 U or more per 1 U of the glutaminase.

Item 8. The production method described in any one of items 1 to 7, in which the bacterium-derived protease is used at a ratio of 500 U or more per 1 U of the glutaminase.

Item 9. The production method described in any one of items 1 to 8, in which the bacterium-derived protease is used at a ratio of 0.01 to 2 U per 1 U of the filamentous fungus-derived protease.

Item 10. The production method described in any one of items 1 to 9, in which the protein is a plant protein.

Item 11. A method for enhancing saltiness of a protein-containing composition, the method including a step of causing a glutaminase, a filamentous fungus-derived protease, and a bacterium-derived protease to act on a protein-containing composition containing sodium chloride and/or potassium chloride, in which
a total content of the sodium chloride and the potassium chloride in the protein-containing composition is 0.35 to 1.90 wt% at the time of eating.

Item 12. A method for enhancing saltiness of a protein-containing composition, the method including a step of causing a glutaminase, a filamentous fungus-derived protease, and a bacterium-derived protease to act on a protein-containing composition containing sodium chloride and potassium chloride, in which
in the protein-containing composition, a content of the sodium chloride is 0.20 wt% or more and less than 0.35 wt% at the time of eating, and a content of the potassium chloride is 0.30 wt% or more at the time of eating.

Item 13. A saltiness enhancer of a protein-containing composition containing sodium chloride and/or potassium chloride, the saltiness enhancer containing a glutaminase, a filamentous fungus-derived protease, and a bacterium-derived protease, in which
a total content of the sodium chloride and the potassium chloride in the protein-containing composition is 0.35 to 1.90 wt% at the time of eating.

Item 14. A saltiness enhancer of a protein-containing composition containing sodium chloride and potassium chloride, the saltiness enhancer containing a glutaminase, a filamentous fungus-derived protease, and a bacterium-derived protease, in which
in the protein-containing composition, a content of the sodium chloride is 0.20 wt% or more and less than 0.35 wt% at the time of eating, and a content of the potassium chloride is 0.30 wt% or more at the time of eating.

Item 15. A processed protein-containing composition obtained by the production method described in any one of items 1 to 10.

Advantageous Effects of Invention

According to the present invention, there is provided a processing technique for enhancing the saltiness of a protein-containing composition.

Description of Embodiments

1. Method for producing processed protein-containing composition

A method for producing a processed protein-containing composition of the present invention includes a step of causing a glutaminase, a filamentous fungus-derived protease, and a bacterium-derived protease to act on a protein-containing composition containing a predetermined amount of sodium chloride and/or potassium chloride (hereinafter, also referred to as "enzyme treatment step"). More specifically, a first embodiment of the method for producing a processed protein-containing composition of the present invention includes a step of causing a glutaminase, a filamentous fungus-derived protease, and a bacterium-derived protease to act on a protein-containing composition containing sodium chloride and/or potassium chloride, in which a total content of the sodium chloride and the potassium chloride is 0.35 to 1.90 wt% at the time of eating, and a second embodiment thereof includes a step of causing a glutaminase, a filamentous fungus-derived protease, and a bacterium-derived protease to act on a protein-containing composition containing sodium chloride and potassium chloride, in which a content of the sodium chloride is 0.20 wt% or more and less than 0.35 wt% at the time of eating, and a content of the potassium chloride is 0.30 wt% or more at the time of eating.

1-1. Enzyme treatment step

In the enzyme treatment step, a glutaminase, a filamentous fungus-derived protease, and a bacterium-derived protease are caused to act on a protein-containing composition containing sodium chloride and/or potassium chloride.

1-1-1. Protein-containing composition

The protein-containing composition as a material of the production method of the present invention is not particularly limited as long as it contains a predetermined amount of sodium chloride and/or potassium chloride and a protein and can be taken in by a living body as it is or by preparing.

1-1-1-1. Sodium chloride and/or potassium chloride

In the first embodiment, as for the amount of the sodium chloride and/or the potassium chloride contained in the protein-containing composition, the total amount of the sodium chloride and the potassium chloride is 0.35 to 1.90 wt% at the time of eating. In the second embodiment, as for each amount of the sodium chloride and the potassium chloride contained in the protein-containing composition, the content of the sodium chloride is 0.20 wt% or more and less than 0.35 wt% at the time of eating, and the content of the potassium chloride is 0.30 wt% or more at the time of eating. When the protein-containing composition is not concentrated or diluted until eating after the enzyme treatment step, or when the protein-containing composition is concentrated until eating and then diluted at the same concentration ratio at the time of eating, the total content of the sodium chloride and the potassium chloride in the protein-containing composition is the same as the total content of the sodium chloride and the potassium chloride at the time of eating. When the protein-containing composition is concentrated or diluted until eating after the enzyme treatment step, the total content of the sodium chloride and the potassium chloride in the protein-containing composition is an amount obtained by multiplying the total content of the sodium chloride and the potassium chloride at the time of eating by a reciprocal of a concentration ratio or an amount obtained by multiplying the total content of the sodium chloride and the potassium chloride at the time of eating by a dilution ratio.

In the first embodiment, from the viewpoint of obtaining the effect of enhancing saltiness, as for the amount of the sodium chloride contained in the protein-containing composition, the total content of the sodium chloride and the potassium chloride at the time of eating is preferably 0.40 to 1.90 wt%, further preferably 0.50 to 1.40 wt%, and further preferably 0.80 to 1.30 wt% or 0.85 to 1.25 wt%. In the first embodiment, from the viewpoint of effectively obtaining the effect of enhancing saltiness and suppressing the salinity concentration, as for the amount of the sodium chloride contained in the protein-containing composition, the content of the sodium chloride at the time of eating may be 0.35 to 1.30 wt%, 0.35 to 1.20 wt%, 0.35 to 1.10 wt%, 0.35 to 1.00 wt%, 0.35 to 0.90 wt%, 0.35 to 0.80 wt%, 0.35 to 0.70 wt%, 0.35 to 0.60 wt%, 0.35 to 0.50 wt%, or 0.35 to 0.40 wt%.

In the second embodiment, from the viewpoint of obtaining the effect of enhancing saltiness, as for the amount of the potassium chloride contained in the protein-containing composition, the content of the potassium chloride at the time of eating is preferably 0.35 wt% or more, more preferably 0.4 wt%, further preferably 0.45 wt%, and still more preferably 0.48 wt% or more. The upper limit of the amount of the potassium chloride contained in the protein-containing composition is not particularly limited, but the content thereof at the time of eating is, for example, 1.90 wt% or less, 1.40 wt% or less, 1.30 wt% or less, 1.20 wt% or less, 1.10 wt% or less, 1.00 wt% or less, 0.90 wt% or less, 0.80 wt% or less, 0.70 wt% or less, or 0.60 wt% or less. In the second embodiment, from the viewpoint of obtaining the effect of reducing bitterness in addition to the effect of enhancing saltiness, as for the amount of the potassium chloride contained in the protein-containing composition, the content of the potassium chloride at the time of eating is preferably 0.55 wt% or less, more preferably 0.50 wt% or less, further preferably 0.45 wt% or less, still more preferably 0.4 wt% or less, even further preferably 0.35 wt% or less, and particularly preferably 0.32 wt% or less. In the second embodiment, from the viewpoint of obtaining the effect of enhancing saltiness, as for the amount of the sodium chloride contained in the protein-containing composition, the content of the sodium chloride at the time of eating is preferably 0.21 wt% or more, more preferably 0.22 wt% or more, and further preferably 0.23 wt% or more. In the second embodiment, from the viewpoint of effectively obtaining the effect of enhancing saltiness and suppressing the salinity concentration, as for the amount of the sodium chloride contained in the protein-containing composition, the content of the sodium chloride at the time of eating may be 0.20 to 0.33 wt%, 0.20 to 0.30 wt%, 0.20 to 0.28 wt%, 0.20 to 0.25 wt%, or 0.20 to 0.24 wt%.

1-1-1-2. Protein

The protein is not particularly limited as long as it is edible, and its origin is not limited to plants and animals.
The plant protein is not particularly limited, and examples thereof include proteins contained in leaf and stem vegetables such as celery, broccoli, onion, garlic, spinach, asparagus, cabbage, kale, cresson, komatsuna, bok choy, radish sprouts, cauliflower, Chinese cabbage, nabana, Chinese mustard, and Kohlrabi; root vegetables such as carrots and burdock; fruit-type vegetables such as tomatoes; pulse crops such as soybean, pea, lentil bean, chickpea, black bean, fava bean, mung bean, lupine bean, and haricot bean; cereal crops such as wheat, barley, oat, sorghum, rice, rye, buckwheat, Japanese barnyard millet, foxtail millet, teff, quinoa, corn, and potato; seeds and nuts such as almond, coconut, peanut, cashew nut, hazelnut, pecan nut, macadamia nut, pistachio, walnut, brazil nut, pili nut, chestnut, sesame, pine nut, hemp seed (industrial hemp), chia seed, quinoa, Amaranthus, canary seed, and linseed; and algae.

The animal protein is not particularly limited, and examples thereof include proteins contained in mammals such as cattle and pigs, birds such as chickens, and fish and shellfish.

In the present invention, the protein may be used singly or in combination of two or more kinds thereof. Among the above proteins, from the viewpoint of further enhancing the effect of enhancing the saltiness, plant proteins are preferable, and proteins derived from leaf and stem vegetables, root vegetables, and pulse crops are more preferable.

### 1-1-1-3. Other components

The plant protein-containing composition may or may not contain any component other than water as other components in addition to the protein, the sodium chloride, and the potassium chloride. Examples of the other components include components derived from the organism of origin of the protein (such as lipids and carbohydrates), other food materials, and food additives. Examples of the food additives include a thickener, a binder, a seasoning (other than sodium chloride and potassium chloride), a pH adjuster, a buffer, a coloring agent, a flavor, and the like.

### 1-1-1-4. Aspect

The aspect of the protein-containing composition may be either untextured or textured.

Untextured protein-containing composition

Examples of the more specific aspect of the untextured protein-containing composition include a liquid, a slurry, and a paste.

Specific examples of the untextured protein-containing composition include (i) a boiling liquid obtained by boiling a protein material to elute a material component in water (specifically, stock, bouillon, fond, broth, brodo, and the like of plant and/or animal origin), (ii) plant milk (substitute milk) or animal milk, (iii) a liquid, slurry, or paste in which the content of a plant protein is increased by such as removing at least any of components other than the protein from the liquid of (i) or (ii); and a liquid, slurry, paste or the like obtained by mixing a dry powder prepared by removing water from the above (i) to (iii) with water.

The protein content in the untextured protein-containing composition is not particularly limited, and is appropriately set according to the aspects, and thus is widely acceptable at, for example, 0.01 wt% or more and 98 wt% or less. For example, when the aspect of the protein-containing composition is a liquid, a slurry, or a paste, the protein content is, for example, 0.01 wt% or more, preferably 0.02 wt% or more, more preferably 0.1 wt% or more or 0.5 wt% or more, further preferably 1 wt% or more or 5 wt% or more, and still more preferably 8 wt% or more, and is, for example, 40 wt% or less, 30 wt% or less, 20 wt% or less, 12 wt% or less, 8 wt% or less, 4 wt% or less, 1 wt% or less, 0.5 wt% or less, 0.3 wt% or less, 0.1 wt% or less, or 0.05 wt% or less.

Textured protein-containing composition

When a plant protein is used as the protein, the textured plant protein-containing composition includes a textured plant protein material, which is a food material commonly known as alternative meats (pseudo-meats). Typical examples of the textured plant protein material include a material in which a raw material mixture containing a plant protein and water is extruded with an extruder or the like and dried or frozen to be textured like meat. Note that, in the present invention, the "meat" imitated by the textured plant protein material means a muscle of an animal that is edible, and when described as "meat", the "meat" is used in the sense of including not only muscles of mammals and birds but also fish and shellfish. When an animal protein is used as the protein, a textured animal protein-containing composition is the "meat" itself.

Examples of the shape of the textured protein-containing composition include a granular shape and a fibrous shape. Examples of the granular shape include massive shapes having various sizes such as a small grain type (mince), a large grain type, and a block type (the size increases in the order of the small grain type, the large grain shape, and the block type); and flat shapes of various sizes such as a flake type, a fillet type, and a slice type (the size increases in the order of the flake type, the fillet type, and the slice type).

### 1-1-2. Enzymes

### 1-1-2-1. Glutaminases

Glutaminases are a generic term for enzymes having an activity of hydrolyzing a γ-glutamyl bond, and are not particularly limited as long as they have the activity. Therefore, glutaminases may be either those having free glutamine as a substrate or those having a glutamine residue as a substrate, and may be either those having no transfer activity or those having transfer activity. Examples of glutaminases that can be used in the present invention include a glutaminase (EC3.5.1.2; enzyme that hydrolyzes free glutamine to glutamic acid), proteinglutaminase (EC3.5.1.44; enzyme that deamidates glutamine residues in proteins or peptides), and transglutaminase (EC2.3.2.13; enzyme that transfers glutamine residues in proteins or peptides to other amino acid residues). In the present invention, as the glutaminase, one kind of these enzymes may be used singly or in combination of a plurality of kinds thereof. Among these glutaminases, from the viewpoint of further enhancing the effect of enhancing the saltiness, a glutaminase (EC3.5.1.2; enzyme that hydrolyzes free glutamine to glutamic acid) is preferable.

The origin of the glutaminase (EC3.5.1.2; enzyme that hydrolyzes free glutamine to glutamic acid) is not particularly limited, and from the viewpoint of further enhancing the effect of enhancing the saltiness, a glutaminase derived from the genus Bacillus or Geobacillus is preferable, and a glutaminase derived from Bacillus amyloliquefaciens is further preferable.

In the use of the microorganism-derived glutaminase (EC3.5.1.2), a culture solution of a microorganism from which the glutaminase is derived or a heterologous host in which a gene encoding the microorganism-derived glutaminase is introduced, a disrupted liquid thereof, and an extract thereof may be used, or a purified product obtained by purifying the microorganism or the heterologous host at an arbitrary level to increase the glutaminase concentration may be used. In the use of the glutaminase, a commercially available enzyme preparation may be used.

The use amount of the glutaminase is not particularly limited, but the use amount thereof per 1 g of the protein is, for example, 0.001 U or more. From the viewpoint of further enhancing the effect of enhancing the saltiness of the protein-containing material, the use amount of the glutaminase per 1 g of the protein is preferably 0.005 U or more, more preferably 0.01 U or more, 0.05 U or more, 0.1 U or more, 0.3 U or more, 0.4 U or more, 0.5 U or more, or 0.6 U or more, further preferably 0.7 U or more, still more preferably 0.8 U or more, and even further preferably 0.9 U or more. The upper limit of the use amount of the glutaminase is not particularly limited, but the use amount thereof per 1 g of the protein is, for example, 100 U or less or 50 U or less, preferably 10 U or less, and more preferably 8 U or less, 6 U or less, 4 U or less, 3 U or less, 2 U or less, or 1.5 U or less.

Note that, for the glutaminase (EC3.5.1.2) activity, L-glutamine is used as a substrate, and the amount of enzyme that produces 1 $\mu$mol of L-glutamic acid per minute is defined as 1 unit (1 U). For the activity of the protein glutaminase (EC3.5.1.44), benzyloxycarbonyl-L-glutaminylglycine (Z-Gln-Gly) is used as a substrate, and the amount of enzyme that liberates 1 $\mu$mol of ammonia per minute is defined as 1 unit (1 U). For the activity of the transglutaminase (EC2.3.2.13), when benzyloxycarbonyl-L-glutaminylglycine and hydroxylamine are used as substrates, the activity of enzyme that produces 1 $\mu$mol of hydroxamic acid per minute is defined as 1 unit (U).

1-1-2-2. Filamentous fungus-derived protease

The filamentous fungus-derived protease is an endopeptidase derived from a filamentous fungus. Specific examples of the filamentous fungus-derived protease include proteases derived from the genera Aspergillus, Rhizopus, Mucor, Neurospora, Penicillium, Rhizomucor, Sclerotinia, and the like. Examples of the protease derived from the genus Aspergillus include a protease derived from Aspergillus oryzae, a protease derived from Aspergillus melleus, and the like. The filamentous fungus-derived protease may be an acid protease or a neutral protease. More specific examples of the filamentous fungus-derived protease include an acid protease derived from Aspergillus oryzae, a neutral protease derived from Aspergillus oryzae, and a neutral protease derived from Aspergillus melleus.

These filamentous fungus-derived proteases may be used singly or in combination of a plurality of kinds thereof. Among these filamentous fungus-derived proteases, from the viewpoint of further enhancing the effect of enhancing the saltiness, a protease derived from the genus Aspergillus is preferable, a protease derived from the genus Aspergillus oryzae is more preferable, and an acid protease derived from the genus Aspergillus oryzae is further preferable.

In the use of the filamentous fungus-derived protease, a culture solution of the filamentous fungus or a heterologous host in which a gene encoding the filamentous fungus-derived protease is introduced, a disrupted liquid thereof, and an extract thereof may be used, or a purified product obtained by purifying these at an arbitrary level to increase the protease concentration may be used. In the use of the filamentous fungus-derived protease, a commercially available enzyme preparation may be used.

The use amount of the filamentous fungus-derived protease is not particularly limited, but the filamentous fungus-derived protease can be used at a ratio of 1000 U or more per 1 U of the glutaminase, and can be used at a ratio of preferably 1500 U or more, more preferably 2000 U or more, and further preferably 2500 U or more, from the viewpoint of further enhancing the effect of enhancing saltiness. The upper limit of the range of use of the filamentous fungus-derived protease per 1 U of the glutaminase is also not particularly limited, and is a ratio of, for example, 4000 U or less, preferably 3500 U or less, more preferably 3000 U or less, and further preferably 2800 U or less.

As for the specific use amount of the filamentous fungus-derived protease, the use amount thereof per 1 g of the protein is, for example, 10 U or more or 50 U or more, preferably 100 U or more or 500 U or more, more preferably 1000 U or more or 2000 U or more, and further preferably 2500 U or more. The upper limit of the range of the use amount of the filamentous fungus-derived protease per 1 g of the protein is not particularly limited, and is, for example, 50000 U or less, 20000 U or less, 10000 U or less, 8000 U or less, 5000 U or less, 4000 U or less, or 3500 U or less.

As for the activity of the filamentous fungus-derived protease, casein is used as a substrate, and the amount of enzyme that causes an increase in colored materials by Folin's reagent corresponding to 1 μg of tyrosine per minute is defined as 1 unit (1 U).

1-1-2-3. Bacterium-derived protease

The bacterium-derived protease is an endopeptidase derived from a bacterium. Specific examples of the bacterial protease include proteases derived from the genera Bacillus, Geobacillus and the like, and more specific examples thereof include proteases derived from Bacillus amyloliquefaciens, Bacillus cereus, Bacillus clausii, Bacillus intermedius, Bacillus lentus, Bacillus licheniformis, Bacillus stearothermophilus, Bacillus subtilis, Bacillus thermoproteolyticus, and the genus Geobacillus thereof.

These proteases derived from the genera Bacillus and Geobacillus may be used singly or in combination of a plurality of kinds thereof. Among these proteases derived from the genera Bacillus and Geobacillus, from the viewpoint of further enhancing the effect of enhancing the saltiness of the protein-containing material, Bacillus stearothermophilus and Geobacillus stearothermophilus are preferable.

In the use of the bacterium-derived protease, a culture solution of the bacterium or a heterologous host in which a gene encoding the bacterium-derived protease is introduced, a disrupted liquid thereof, and an extract thereof may be used, or a purified product obtained by purifying these at an arbitrary level to increase the protease concentration may be used. In the use of the bacterium-derived protease, a commercially available enzyme preparation may be used.

The use amount of the bacterium-derived protease is not particularly limited, but the bacterium-derived protease can be used at a ratio of 500 U or more per 1 U of the glutaminase, and can be used at a ratio of preferably 700 U or more, more preferably 900 U or more, and further preferably 1000 U or more, from the viewpoint of further enhancing the effect of enhancing saltiness. The upper limit of the range of use of the bacterium-derived protease per 1 U of the glutaminase is also not particularly limited, and is a ratio of, for example, 2000 U or less, preferably 1700 U or less, more preferably 1400 U or less, and further preferably 1200 U or less.

As for the specific use amount of the bacterium-derived protease, the use amount thereof per 1 g of the protein is, for example, 10 U or more. The use amount thereof is preferably 50 U or more, more preferably 100 U or more, further preferably 500 U or more, and still more preferably 900 U or more. The upper limit of the range of the use amount of the bacterium-derived protease per 1 g of the protein is not particularly limited, and is, for example, 30000 U or less, 20000 U or less, 10000 U or less, 8000 U or less, 5000 U or less, 3000 U or less, 2000 U or less, 1500 U or less, or 1200 U or less.

The use amount of the bacterium-derived protease per 1 U of the filamentous fungus-derived protease is a ratio of, for example, 0.01 to 2 U, preferably 0.05 to 1 U, more preferably 0.1 to 0.7 U, further preferably 0.2 to 0.6 U, and still more preferably 0.3 to 0.5 U.

As for the activity of the bacterium-derived protease, casein is used as a substrate, and the amount of enzyme that causes an increase in colored materials by Folin's reagent corresponding to 1 μg of tyrosine per minute is defined as 1 unit (1 U).

1-1-3. Enzyme treatment reaction

An enzyme treatment reaction in which the three predetermined enzymes are caused to act on a protein-containing composition containing a predetermined amount of sodium chloride and/or potassium chloride can be usually performed by subjecting a reaction mixture containing the protein-containing composition and the three predetermined enzymes to reaction conditions of the three predetermined enzymes. As a result, a treatment for performing a reaction of enhancing the saltiness of the protein-containing composition is performed.

Note that the enzyme treatment with the glutaminase, the enzyme treatment with the filamentous fungus-derived protease, and the enzyme treatment with the bacterium-derived protease may all be performed simultaneously, the enzyme treatment with any two of the three enzymes may be performed simultaneously and the enzyme treatment with the remaining one enzyme may be performed stepwise therebefore or thereafter, or all of the enzyme treatments with respective three enzymes may be performed stepwise. Preferably, all three enzymes can be performed simultaneously.

The reaction conditions (temperature and pH) can be appropriately set according to such as the thermal characteristics and pH characteristics of the enzyme to be used. Specific examples of the reaction temperature include 10 to 90°C, preferably 20 to 80°C, more preferably 25 to 70°C, further preferably 30 to 65°C, still more preferably 35 to 60°C, and even further preferably 40 to 55°C or 45 to 55°C. Specific examples of the pH (at 25°C) of the mixture of the protein-containing composition containing sodium chloride and/or potassium chloride and an enzyme include 3 to 9, preferably 4 to 8, more preferably 4.5 to 7.5, further preferably 5 to 7, and still more preferably 5.5 to 6.5. The reaction time may be appropriately set through a preliminary experiment depending on such as the reaction scale and/or the degree of the effect of enhancing saltiness to be obtained, and is, for example, 30 seconds to 48 hours, preferably 1 minute to 24 hours, more preferably 5 minutes to 12 hours, further preferably 10 minutes to 6 hours, still more preferably 15 minutes to 2 hours, and even further preferably 20 minutes to 1 hour.

1-2. Other steps

The production method of the present invention may or may not include steps other than the enzyme treatment step. Examples of the other steps include a step of preparing a protein-containing composition, a step of deactivating an enzyme, a cooling step, a filtration step, and the like. These other steps may be performed singly or two or more steps may be performed in combination.

In the step of deactivating an enzyme, the enzyme-treated product obtained in the enzyme treatment step may be subjected to conditions under which a glutaminase and a protease are deactivated. As the deactivation conditions, conditions for denaturing each enzyme may be appropriately selected, and heat deactivation is typically performed. Specific temperature conditions for heat deactivation may be set according to the thermal characteristics of the enzyme actually used, and examples thereof include 70°C or higher, preferably 80°C or higher, and more preferably 85°C or higher. The time for heat deactivation is not particularly limited, and is, for example, 5 to 20 minutes and preferably 8 to 15 minutes.

2. Processed protein-containing composition

As described above, a processed protein-containing composition having enhanced saltiness at the time of eating can be obtained by the method for producing a processed protein-containing composition, the method including an enzyme treatment step of causing the three predetermined enzymes to act on a protein-containing composition containing a predetermined amount of sodium chloride and/or potassium chloride. Therefore, the present invention also provides a processed protein-containing composition obtained by the production method described in "1. Method for producing processed protein-containing composition" above.

The processed protein-containing composition of the present invention is processed to enhance the saltiness at the time of eating although sodium chloride and/or potassium chloride is not added as compared with the original saltiness of the protein-containing composition containing a predetermined amount of sodium chloride and/or potassium chloride (the saltiness of the protein-containing composition which contains a predetermined amount of sodium chloride and/or potassium chloride and on which the three predetermined enzymes are not caused to act).

The processed protein-containing composition of the present invention is subjected to such as preparation as necessary, and can be used as various foods and beverages, seasonings, and the like.

The temperature of the processed protein-containing composition of the present invention at the time of eating is not particularly limited, and is appropriately determined according to the food and beverage form. Specific examples of the temperature at the time of eating include 4 to 70°C. In general, it is well known that even at the same salinity concentration, as the temperature at the time of eating is lower, stronger saltiness is felt. On the other hand, the processed protein-containing composition of the present invention tends to have an excellent effect of increasing the saltiness strength as the temperature at the time of eating is higher. For this reason, the processed protein-containing composition of the present invention can firmly feel the increased saltiness without increasing the salinity even when the processed protein-containing composition is eaten at a high temperature at which it is inherently difficult to feel the saltiness. From such a viewpoint, a preferable example of the temperature at the time of eating is 25 to 70°C, preferably 40 to 60°C, and more preferably 45 to 55°C.

3. Method for enhancing saltiness of protein-containing composition

As described above, by the enzyme treatment step of causing the three predetermined enzymes to act on a protein-containing composition containing a predetermined amount of sodium chloride and/or potassium chloride, the saltiness of the protein-containing composition containing a predetermined amount of sodium chloride at the time of eating can be enhanced. Therefore, the present invention also provides a method for enhancing saltiness of a protein-containing composition.

A first embodiment of the method for enhancing saltiness of a protein-containing composition of the present invention includes a step of causing a glutaminase, a filamentous fungus-derived protease, and a bacterium-derived protease to act on a protein-containing composition containing sodium chloride and/or potassium chloride (enzyme treatment step), in which a total content of the sodium chloride and the potassium chloride is 0.35 to 1.90 wt% at the time of eating.

A second embodiment of the method for enhancing saltiness of a protein-containing composition of the present invention includes a step of causing a glutaminase, a filamentous fungus-derived protease, and a bacterium-derived protease to act on a protein-containing composition containing sodium chloride and potassium chloride (enzyme treatment step), in which a content of the sodium chloride is 0.20 wt% or more and less than 0.35 wt% at the time of eating, and a content of the potassium chloride is 0.30 wt% or more at the time of eating.

In the method for enhancing saltiness of the protein-containing composition of the present invention, details of the protein-containing composition and each enzyme, details of the enzyme treatment step, and other steps that may be included are as described in "1. Method for producing processed protein-containing composition" above.

4. Saltiness enhancer of protein-containing composition

As described above, the three predetermined enzymes are caused to act on a protein-containing composition containing a predetermined amount of sodium chloride and/or potassium chloride and thus can increase the saltiness of the protein-containing composition. Therefore, the present invention also provides a saltiness enhancer of a protein-containing composition.

A first embodiment of the saltiness enhancer of a protein-containing composition of the present invention is used for enhancing saltiness of a protein-containing composition containing sodium chloride and/or potassium chloride at the time of eating, the saltiness enhancer containing a glutaminase, a filamentous fungus-derived protease, and a bacterium-derived protease, in which a total content of the sodium chloride and the potassium chloride in the protein-containing composition is 0.35 to 1.90 wt% at the time of eating.

A second embodiment of the saltiness enhancer of a protein-containing composition of the present invention is used for enhancing saltiness of a protein-containing composition containing sodium chloride and potassium chloride at the time of eating, the saltiness enhancer containing a glutaminase, a filamentous fungus-derived protease, and a bacterium-derived protease, in which in the protein-containing composition, a content of the sodium chloride is 0.20 wt% or more and less than 0.35 wt% at the time of eating and a content of the potassium chloride is 0.30 wt% or more at the time of eating.

4-1. Active ingredients

The saltiness enhancer of a protein-containing composition of the present invention contains a glutaminase, a filamentous fungus-derived protease, and a bacterium-derived protease as active ingredients. Details of each enzyme are as shown in "1-1-2. Enzymes" in "1. Method for producing processed protein-containing composition" above.

4-2. Other components

The saltiness enhancer of a protein-containing composition of the present invention may or may not contain, as components other than the enzyme to be the active ingredient, an additive and/or a base that are/is pharmaceutically acceptable for an enzyme preparation. Examples of such additives and bases include excipients, buffers, antioxidants, ultraviolet inhibitors, preservatives, antiseptics, pH adjusters, dispersants, emulsifiers, solubilizing agents, carriers, solvents (such as water) and the like. These additives and bases may be used singly or in combination of two or more kinds thereof. The contents of these additives and bases may be appropriately set according to such as the type and/or preparation form of these components.

4-3. Aspect

The aspect of the saltiness enhancer of a protein-containing composition of the present invention is not particularly limited, and examples thereof include dry preparations in a powder form, a fine particulate form, and a granular form, and liquid preparations.

4-4. Use application

The saltiness enhancer of a protein-containing composition of the present invention is used for enhancing saltiness of a protein-containing composition containing sodium chloride and/or potassium chloride, in which a total content of the sodium chloride and the potassium chloride at the time of eating is 0.35 to 1.90 wt%. Details of the protein-containing composition are as described in "1-1-1. Protein-containing composition" of "1. Method for producing a processed protein-containing composition" above, and specific use methods are as described in "1-1. Enzyme treatment step" of "1. Method for producing processed protein-containing composition" above.

Examples

Hereinafter, the present invention will be specifically described by means of Examples; however, the present invention is not to be construed as being limited to the following Examples.

[Used enzyme]

[Table 1]

| Enzyme name | Origin | Manufacturer |
|---|---|---|
| Glutaminase (EC3.5.1.2) | Bacillus amyloliquefaciens | Amano Enzyme Inc. |
| Filamentous fungus-derived protease (acid protease) | Aspergillus oryzae | Amano Enzyme Inc. |
| Bacterium-derived protease | Geobacillus stearothermophilus | Amano Enzyme Inc. |

(Glutaminase activity measurement method)

In a test tube, 1 mL of an enzyme solution was weighed and left to stand in a constant-temperature water bath at 37°C for 5 minutes. To this solution, 1 mL of a 2% (w/v) L-glutamine solution (0.1 mol/L acetate buffer solution (pH 6.0)) preheated to 37°C was added, mixed, and left to stand for exactly 10 minutes. After standing, 1 mL of a 5% (v/v) perchloric acid reagent was added, mixed, and immediately placed in ice-water. After the mixture was left to stand for 1 minute or longer, 1 mL of a sodium hydroxide reagent (0.75 mol/L) was added and mixed to obtain a reaction solution. L-glutamic acid in the reaction solution was quantified using an L-glutamic acid measurement kit "YAMASA" NEO (manufactured by YAMASA CORPORATION). Under the present conditions, the amount of enzyme that produces 1 $\mu$mol of L-glutamic acid per minute was defined as 1 unit.

(Protease activity measurement method)

After 5 mL of 0.6% (w/v) casein solution (0.05 mol/L sodium hydrogen phosphate, pH 8.0 [in the case of a bacterial protease] or 0.7% (v/w) lactic acid, pH 3.0 [in the case of a filamentous fungus protease]) was warmed at 37°C for 10 minutes, 1 mL of a sample solution containing a protease was added, and the mixture was immediately shaken. After this solution was left to stand at 37°C for 10 minutes, 5 mL of a trichloroacetic acid reagent (containing 1.8% trichloroacetic acid, 1.8% sodium acetate and 0.33 mol/L acetic acid [in the case of a bacterial protease] or containing 0.44 mol/L trichloroacetic acid [in the case of a filamentous fungus protease]) was added, the mixture was shaken, and left to stand at 37°C for 30 minutes again, and the mixture was filtered. The first filtrate (3 mL) was removed, the next filtrate (2 mL) was weighed, 5 mL of a 0.55 mol/L sodium carbonate reagent and 1 mL of Folin's reagent (1 → 3) were added, and the mixture was shaken well and left to stand at 37°C for 30 minutes. An absorbance AT of this solution (enzymatic reaction solution) at a wavelength of 660 nm was measured using water as a control.
Separately, an absorbance AB of a solution (blank) obtained by performing the same operation as in the above-described enzymatic reaction solution was measured, except that 1 mL of a sample solution containing a protease was weighed, 5 mL of a trichloroacetic acid reagent (1.8% trichloroacetic acid, 1.8% sodium acetate and 0.33 mol/L acetic acid [in the case of a bacterial protease] or 0.44 mol/L of a trichloroacetic acid [in the case of a filamentous fungus protease]) was added and immediately shaken, 5 mL of a 0.6% (v/w) casein solution (0.05 mol/L sodium hydrogen phosphate, pH 8.0 [in the case of a bacterial protease] or 0.7% (v/w) lactic acid, pH 3.0 [in the case of a filamentous fungus protease]) was then added and shaken, and the mixture was left to stand at 37°C for 30 minutes. The amount of enzyme that causes an increase in colored materials by Folin's reagent corresponding to 1 $\mu$g of tyrosine per minute was defined as 1 unit (1 U).
Each of 1 mL, 2 mL, 3 mL, and 4 mL of a 1 mg/mL tyrosine standard stock solution (0.2 mol/L of hydrochloric acid) was weighed, and a 0.2 mol/L hydrochloric acid reagent was added thereto to make 100 mL. Each solution (2 mL) was weighed, 5 mL of a 0.55 mol/L sodium carbonate reagent and 1 mL of Folin's reagent (1 → 3) were added, and the mixture was immediately shaken and left to stand at 37°C for 30 minutes. For these solutions, absorbances A1, A2, A3, and A4 at a wavelength of 660 nm were measured using, as a control, a solution obtained by weighing 2 mL of a 0.2 mol/L hydrochloric acid reagent and performing the same operation as described above. The absorbances A1, A2, A3, and A4 were plotted on the vertical axis and the amount ($\mu$g) of tyrosine in 2 mL of each solution was plotted on the horizontal axis to prepare a calibration curve, and the amount ($\mu$g) of tyrosine with respect to the absorbance difference of 1 was determined.

[Mathematical Formula 1]

$$\text{Protease activity (U/g, U/mL)} = (\text{AT-AB}) \times \text{F} \times 11/2 \times 1/10 \times 1/\text{M}$$

AT:     Absorbance of enzymatic reaction solution

AB:     Absorbance of blank

F:      Amount (μg) of tyrosine when absorbance difference determined from tyrosine calibration curve is 1

11/2:   Conversion coefficient to total liquid amount after reaction stop

1/10:   Conversion coefficient per minute of reaction time

M:     Amount (g or mL) of sample in 1 mL of sample solution

[Test Example 1]

(1) Preparation of processed plant protein-containing composition

A pea protein material (PURIS Pea870 (manufactured by PURIS, protein content: 80 wt%)) was suspended in water at a pea protein content of 10 wt% and sodium chloride was added to prepare a liquid protein-containing composition. The addition amount of the sodium chloride was the amount as shown in Table 1 in terms of the content at the time of eating, that is, the content in a fire-molded product described later. This protein-containing composition was heated to 50°C with stirring, three kinds of enzymes in amounts shown in Table 1 were added, and the mixture was reacted at 50°C for 1 hour. Thereafter, the temperature was raised to 85°C and held for 10 minutes to deactivate the enzymes. The obtained enzyme treatment liquid was pulverized with a spray dryer (Model: Henningsen Pilot Plant Tower Spray Dryer Model T-20, inlet temperature: 140 to 150°C, outlet temperature: 90 to 100°C) to obtain a powdery processed protein-containing composition.

To 12.5 g of the powdered processed protein-containing composition, 22.5 mL of hot water was added, and the powdered processed protein-containing composition was reconstituted with water at 50°C for 30 minutes. The whole amount was transferred to a bowl, and 1 g of methyl cellulose (Shin-Etsu Chemical Co., Ltd.) and 2 mL of olive oil (The Nisshin OilliO Group, Ltd.) were mixed and molded to obtain a patty molded product. The patty molded product was fired in an oven at 150°C for 10 minutes to obtain fire-molded products of Comparative Examples 1 to 3 and Examples 1 to 4.

For comparison of the saltiness increasing action of each of the fire-molded products of Comparative Examples 1 to 3 and Examples 1 to 4, the same operation as in each of Comparative Examples 1 to 3 and Examples 1 to 4 was performed except that no enzyme was added, and a reference fire-molded product was obtained.

(2) Evaluation of effect of increasing saltiness - 1

The saltiness of the fire-molded products of Comparative Examples 1 to 3 and Examples 1 to 4 was evaluated by trained sensory evaluators according to the following criteria. The results are shown in Table 2.

- The saltiness is comparable to that of the reference fire-molded product having the same sodium chloride content.
+ The saltiness is slightly stronger than that of the reference fire-molded product having the same sodium chloride content.
++ The saltiness is stronger than that of the reference fire-molded product having the same sodium chloride content.

[Table 2]

|  | Comparative Example 1 | Comparative Example 2 | **Example 1** | **Example 2** | **Example 3** | **Example 4** | Comparative Example 3 |
|---|---|---|---|---|---|---|---|
| Protein (wt% in protein-containing composition) | 10 | | | | | | |
| Sodium chloride (wt% at the time of eating) | 0.00 | 0.30 | **0.60** | **0.90** | **1.20** | **1.81** | 2.41 |
| Glutaminase (U/1 g protein) | 1 | | | | | | |

(continued)

|  | Comparative Example 1 | Comparative Example 2 | **Example 1** | **Example 2** | **Example 3** | **Example 4** | Comparative Example 3 |
|---|---|---|---|---|---|---|---|
| Filamentous fungus-derived protease (U/1 g protein) | 3000 | | | | | | |
| Bacterium-derived protease (U/1 g protein) | 1000 | | | | | | |
| Effect of increasing saltiness | - | - | + | ++ | ++ | + | - |

As described above, when the protein-containing composition containing sodium chloride in a content range of 0.35 to 1.90 wt% at the time of eating was treated with the glutaminase, the filamentous fungus-derived protease, and the bacterium-derived protease, the effect of increasing saltiness was recognized (Examples 1 to 4), and when the amount of sodium chloride was deviated from the above range, the effect of increasing saltiness was not recognized (Comparative Examples 1 to 3).

(3) Evaluation of effect of increasing saltiness - 2

The strength of each taste (saltiness, umami, richness (overall assessment of taste continuity, spreadness, and complexity), bitterness, and sour taste) of the fire-molded products of Comparative Example 1 and Example 3 was rated by 15 trained sensory inspectors according to the following criteria, and the average score was taken as the score of each taste. The results are shown in Table 3.

-2 The taste to be evaluated is weaker than that of the reference fire-molded product having the same sodium chloride content.
-1 The taste to be evaluated is slightly weaker than that of the reference fire-molded product having the same sodium chloride content.
0 The taste to be evaluated is comparable to that of the reference fire-molded product having the same sodium chloride content.
+1 The taste to be evaluated is slightly stronger than that of the reference fire-molded product having the same sodium chloride content.
+2 The taste to be evaluated is stronger than that of the reference fire-molded product having the same sodium chloride content.

[Table 3]

|  | Comparative Example 1 | **Example 3** |
|---|---|---|
| Protein (wt% in protein-containing composition) | 10 | |
| Sodium chloride (wt% at the time of eating) | 0.00 | **1.20** |
| Glutaminase (U/1 g protein) | 1 | 1 |
| Filamentous fungus-derived protease (U/1 g protein) | 3000 | 3000 |
| Bacterium-derived protease (U/1 g protein) | 1000 | 1000 |
| Saltiness score | 0.3 | **1.4** |
| Umami score | 1.3 | 1.7 |
| Richness score | 1.1 | 1.5 |

(continued)

|  | Comparative Example 1 | **Example 3** |
|---|---|---|
| Bitterness score | 0 | 0 |
| Sour taste score | 0 | 0 |

As shown in Table 3, according to Example 3, among respective tastes, unlike the effects of improving richness and umami, the effect of increasing saltiness was confirmed to be remarkably high.

[Test Example 2]

(1) Preparation of processed plant protein-containing composition

Vegetable stock (manufactured by KAGOME CO., Ltd.) prepared from onion, carrot, celery, broccoli, and the like was diluted with water, and sodium chloride was added thereto to prepare a liquid protein-containing composition having the composition shown in Table 4 for protein, lipid, carbohydrate, sodium chloride, and potassium chloride. Three enzymes in the amounts shown in Table 3 were added to the protein-containing composition (pH at 25°C was 5.98), then heated to 50°C, and stirred for 30 minutes. Thereafter, the enzymes were held at 90°C for 10 minutes to be deactivated, thereby obtaining liquid processed protein-containing compositions of Examples 5 to 9.
For comparison of the saltiness increasing action of each of the processed protein-containing compositions of Examples 5 to 9, the same operation as in each of Examples 5 to 9 was performed except that no enzyme was added, and a reference processed protein-containing composition was obtained.

(2) Evaluation of effect of increasing saltiness

The processed protein-containing compositions of Examples 5 to 9 (50°C) were evaluated for an increase in saltiness without concentration or dilution. Specifically, how much the saltiness level of the processed protein-containing compositions (50°C) of Examples 5 to 9 was when the saltiness level of the reference processed protein-containing composition (50°C) having the same sodium chloride content was taken as 100% was evaluated by 15 trained sensory evaluators and averaged to derive a relative saltiness strength (%). The results are shown in Table 4.

[Table 4]

|  | **Example 5** | **Example 6** | **Example 7** | **Example 8** | **Example 9** |
|---|---|---|---|---|---|
| Protein (wt%) | 0.02 | | | | |
| Lipid (wt%) | 0.01 | | | | |
| Carbohydrate (wt%) | 0.47 | | | | |
| Sodium chloride (wt%) | **0.35** | **0.40** | **0.45** | **0.50** | **0.23** |
| Potassium chloride (wt%) | **0.00** | **0.00** | **0.00** | **0.00** | **0.50** |
| Glutaminase (U/1 g protein) | 1 | | | | |
| Filamentous fungus-derived protease (U/1 g protein) | 3000 | | | | |
| Bacterium-derived protease (U/1 g protein) | 1000 | | | | |
| Relative saltiness strength (%) | **109** | **117** | **121** | **126** | **109** |

The content (wt%) of each component is the content in the protein-containing composition and at the time of eating.
As shown in Table 4, when the protein-containing composition containing sodium chloride and potassium chloride in an amount satisfying a content (total amount) of 0.35 to 1.90 wt% at the time of eating or containing sodium chloride in an amount satisfying a content of 0.2% or more and less than 0.35% at the time of eating and potassium chloride in an amount satisfying a content of 0.30 wt% or more at the time of eating was treated with the glutaminase, the filamentous fungus-derived protease, and the bacterium-derived protease, the effect of increasing saltiness was recognized (Examples 5 to 9). Note that, when the salinity amount of the processed protein-containing composition of Examples 5 to 9 by a Na⁺ sensor and the salinity amount of the reference processed protein-containing composition having the same sodium chloride content by a Na⁺ sensor were compared, it was confirmed that no salinity was newly generated by the enzyme treatment. Note that, in addition to the effect of increasing saltiness, the effects of increasing roasted savor, umami, and richness were also recognized.

[Test Example 3]

A processed protein-containing composition (Example 10) was prepared in the same manner as in Example 9 in Test Example 2, except that the amount of potassium chloride was changed from 0.50 wt% to 0.30 wt%. In Example 10, as in Test Example 2, the effect of increasing saltiness and the effect of reducing bitterness were evaluated based on the taste of the reference processed protein-containing composition prepared without using the enzymes (glutaminase, filamentous fungus-derived protease, and bacterium-derived protease). As a result, the effect of increasing saltiness was recognized, and the effect of reducing bitterness was also recognized.

[Test Example 4]

The effect of increasing saltiness of the processed protein-containing composition of Example 8 prepared in Test Example 2 was evaluated at 25°C or 5°C in addition to the evaluation at 50°C shown in Test Example 2. The relative strength (%) of the saltiness at each temperature at the time of eating of the processed protein-containing composition of Example 8 when the saltiness of the reference processed protein-containing composition (processed protein-containing composition obtained by performing the same operation as in Example 8 except that no enzyme was added) at each temperature at the time of eating was taken as 100% was derived in the same manner as in Test Example 2. The results are shown in Table 5.

[Table 5]

|  |  | Reference Example | Example 8 |
|---|---|---|---|
| Protein (wt%) | | 0.02 | 0.02 |
| Lipid (wt%) | | 0.01 | 0.01 |
| Carbohydrate (wt%) | | 0.47 | 0.47 |
| Sodium chloride (wt%) | | 0.50 | 0.50 |
| Glutaminase (U/1 g protein) | | - | 1 |
| Filamentous fungus-derived protease (U/1 g protein) | | - | 3000 |
| Bacterium-derived protease (U/1 g protein) | | - | 1000 |
| Relative saltiness strength (%) | Temperature at the time of eating 50°C | 100 | **126** |
| | Temperature at the time of eating 25°C | 100 | **115** |
| | Temperature at the time of eating 5°C | 100 | **105** |

The content (wt%) of each component is the content in the protein-containing composition and at the time of eating.

As shown in Table 5, an increase in saltiness was confirmed at any temperature. In general, it is well known that even at the same salinity concentration, as the temperature at the time of eating is lower, stronger saltiness is felt. In Table 5, the saltiness of the reference processed protein-containing composition is indicated as 100 for each temperature at the time of eating, but actually, similarly to the general tendency, the saltiness strength increased as the temperature was lower. On the other hand, the effect of increasing saltiness of the processed protein-containing composition of Example 8 was higher at 25°C than at 5°C, and particularly significantly higher at 50°C. That is, it was found that the processed protein-containing composition of Example 8 can obtain a remarkable effect of increasing saltiness even at a temperature at which only a weak saltiness can be originally felt.

[Test Example 5]

Various amino acids were added to a reference processed protein-containing composition (processed protein-containing composition obtained by performing the same operation as in Example 8 except that no enzyme was added) corresponding to Example 8 to prepare processed protein-containing compositions of Comparative Examples 4 to 6. The addition amount of these various amino acids was set to the same amount as the theoretical amount of the amino acid generated by the enzymatic reaction in Example 8. The relative strength (%) of the saltiness of the processed protein-containing composition when each saltiness of the reference processed protein-containing composition was taken as 100% was derived in the same manner as in Test Example 2. The strength of umami was also evaluated by the same method as the method for evaluating the strength of saltiness. Note that the temperature at the time of eating was set to 50°C. The results are shown in Table 6.

[Table 6]

|  | Reference Example | Comparative Example 4 | Comparative Example 5 | Comparative Example 6 | **Example 8** |
|---|---|---|---|---|---|
| Protein (wt%) | 0.02 | 0.02 | 0.02 | 0.02 | **0.02** |
| Lipid (wt%) | 0.01 | 0.01 | 0.01 | 0.01 | **0.01** |
| Carbohydrate (wt%) | 0.47 | 0.47 | 0.47 | 0.47 | **0.47** |
| Sodium chloride (wt%) | 0.50 | 0.50 | 0.50 | 0.50 | **0.50** |
| Leucine (mM) | - | 0.076 | - | 0.076 | - |
| Isoleucine (mM) | - | 0.069 | - | 0.069 | - |
| Valine (mM) | - | 0.093 | - | 0.093 | - |
| Glutamic acid (mM) | - | - | 0.21 | 0.21 | - |
| Glutaminase (U/1 g protein) | - | - | - | - | **1** |
| Filamentous fungus-derived protease (U/1 g protein) | - | - | - | - | **3000** |
| Bacterium-derived protease (U/1 g protein) | - | - | - | - | **1000** |
| Relative saltiness strength (%) | 100 | 98 | 111 | 121 | **126** |
| Relative umami strength (%) | 100 | 101 | 130 | 123 | **126** |

The content (wt%) of each component is the content in the protein-containing composition and at the time of eating.

From comparison between Comparative Examples 5 and 6 and Example 8 in Table 6, the remarkable effect of increasing saltiness of Example 8 was not merely an effect due to release of glutamic acid as an umami component, but a result of a synergistic effect due to release of various other amino acids by the enzyme treatment, and was exhibited at an unexpected level. In Example 8, a remarkable increasing effect on umami was also recognized. From the comparison between Comparative Examples 5 and 6 and Example 8 in Table 6, the remarkable effect of increasing umami of Example 8 was exhibited at an unexpected level in that it was not an effect due to the release of glutamic acid as the umami component.

**Claims**

1. A method for producing a processed protein-containing composition, the production method comprising a step of causing a glutaminase, a filamentous fungus-derived protease, and a bacterium-derived protease to act on a protein-containing composition containing sodium chloride and/or potassium chloride, wherein
a total content of the sodium chloride and the potassium chloride is 0.35 to 1.90 wt% at the time of eating.

2. A method for producing a processed protein-containing composition, the production method comprising a step of causing a glutaminase, a filamentous fungus-derived protease, and a bacterium-derived protease to act on a protein-containing composition containing sodium chloride and potassium chloride, wherein
a content of the sodium chloride is 0.20 wt% or more and less than 0.35 wt% at the time of eating, and a content of the potassium chloride is 0.30 wt% or more at the time of eating.

3. The production method according to claim 1 or 2, wherein the glutaminase is a glutaminase (EC3.5.1.2).

4. The production method according to claim 3, wherein the glutaminase is a glutaminase derived from a bacterium belonging to the genus Bacillus or Geobacillus.

5. The production method according to claim 1 or 2, wherein the filamentous fungus-derived protease is a protease derived from the genus Aspergillus.

6. The production method according to claim 1 or 2, wherein the bacterium-derived protease is a protease derived from a bacterium belonging to the genus Bacillus or Geobacillus.

7. The production method according to claim 1 or 2, wherein the filamentous fungus-derived protease is used at a ratio of 1000 U or more per 1 U of the glutaminase.

8. The production method according to claim 1 or 2, wherein the bacterium-derived protease is used at a ratio of 500 U or more per 1 U of the glutaminase.

9. The production method according to claim 1 or 2, wherein the bacterium-derived protease is used at a ratio of 0.01 to 2 U per 1 U of the filamentous fungus-derived protease.

10. The production method according to claim 1 or 2, wherein the protein is a plant protein.

11. A method for enhancing saltiness of a protein-containing composition, the method comprising a step of causing a glutaminase, a filamentous fungus-derived protease, and a bacterium-derived protease to act on a protein-containing composition containing sodium chloride and/or potassium chloride, wherein
a total content of the sodium chloride and the potassium chloride in the protein-containing composition is 0.35 to 1.90 wt% at the time of eating.

12. A method for enhancing saltiness of a protein-containing composition, the method comprising a step of causing a glutaminase, a filamentous fungus-derived protease, and a bacterium-derived protease to act on a protein-containing composition containing sodium chloride and potassium chloride, wherein
in the protein-containing composition, a content of the sodium chloride is 0.20 wt% or more and less than 0.35 wt% at the time of eating, and a content of the potassium chloride is 0.30 wt% or more at the time of eating.

13. A saltiness enhancer of a protein-containing composition containing sodium chloride and/or potassium chloride, the saltiness enhancer comprising a glutaminase, a filamentous fungus-derived protease, and a bacterium-derived protease, wherein
a total content of the sodium chloride and the potassium chloride in the protein-containing composition is 0.35 to 1.90 wt% at the time of eating.

14. A saltiness enhancer of a protein-containing composition containing sodium chloride and potassium chloride, the saltiness enhancer comprising a glutaminase, a filamentous fungus-derived protease, and a bacterium-derived protease, wherein
in the protein-containing composition, a content of the sodium chloride is 0.20 wt% or more and less than 0.35 wt% at the time of eating, and a content of the potassium chloride is 0.30 wt% or more at the time of eating.

15. A processed protein-containing composition obtained by the production method according to claim 1 or 2.

## INTERNATIONAL SEARCH REPORT

| International application No. |
| --- |
| **PCT/JP2024/011335** |

**A. CLASSIFICATION OF SUBJECT MATTER**

*A23L 5/00*(2016.01)i; *A23J 3/14*(2006.01)i; *A23L 27/00*(2016.01)i; *A23L 27/21*(2016.01)i
FI: A23L5/00 M; A23J3/14; A23L27/00 Z; A23L27/21 B

According to International Patent Classification (IPC) or to both national classification and IPC

**B. FIELDS SEARCHED**

Minimum documentation searched (classification system followed by classification symbols)

A23L5/00; A23J3/14; A23L27/00; A23L27/21

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | WO 2022/191303 A1 (AMANO ENZYME U.S.A. CO., LTD.) 15 September 2022 (2022-09-15) claims, examples, paragraph [0006] | 1, 3-11, 13, 15 |
| A | claims, examples, paragraph [0006] | 2, 12, 14 |
| Y | JP 7-79707 A (AJINOMOTO CO., INC.) 28 March 1995 (1995-03-28) example 23 | 1, 3-11, 13, 15 |
| A | example 23 | 2, 12, 14 |
| Y | JP 3-232478 A (AJINOMOTO CO., INC.) 16 October 1991 (1991-10-16) example 3 | 1, 3-11, 13, 15 |
| A | example 3 | 2, 12, 14 |
| Y | JP 7-250651 A (AJINOMOTO CO., INC.) 03 October 1995 (1995-10-03) example 1 | 1, 3-11, 13, 15 |
| A | example 1 | 2, 12, 14 |

☐ Further documents are listed in the continuation of Box C.　　☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **28 May 2024** | **11 June 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

International application No.

**PCT/JP2024/011335**

| Patent document cited in search report | | | Publication date (day/month/year) | Patent family member(s) | Publication date (day/month/year) |
|---|---|---|---|---|---|
| WO | 2022/191303 | A1 | 15 September 2022 | EP 4305968 A1 claims, examples, paragraph [0006] CN 116964214 A | |
| JP | 7-79707 | A | 28 March 1995 | (Family: none) | |
| JP | 3-232478 | A | 16 October 1991 | (Family: none) | |
| JP | 7-250651 | A | 03 October 1995 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2022191303 A